# EUROPÄISCHE PATENTANMELDUNG

(11) **EP 1 837 225 A2**
(43) Veröffentlichungstag der Anmeldung: **26.09.2007**
(21) Anmeldenummer: 07004104.1
(22) Anmeldetag: 28.02.2007
(51) Int. Cl.: B60K 17/346, B60K 17/35

(54) **Antriebssystem für allradgetriebene Kraftfahrzeuge**

(30) Priorität: 24.03.2006 DE 102006013542
(71) Anmelder: AUDI AKTIENGESELLSCHAFT, 85045 Ingolstadt (DE)
(72) Erfinder: Meissner, Tim Christopher, 85053 Ingolstadt (DE); Fuchs, Johann, Dr., 85049 Ingolstadt (DE); Schwarz, Ralf, Dr., 85049 Ingolstadt (DE); Meixner, Christian, 85049 Ingolstadt (DE); Märkl, Johann, 85049 Ingolstadt (DE)
(74) Vertreter: Lehle, Josef

(57) **Zusammenfassung**

Die Erfindung betrifft ein Antriebssystem für allradgetriebene Kraftfahrzeuge, mit einer Vorrichtung zur Antriebsverteilung auf ein vorderes und ein hinteres Differenzial, welche die Antriebsleistung auf die jeweils zugeordneten Räder übertragen, sowie mit einer Vorrichtung zur gekoppelten variablen Verteilung der Antriebskräfte in Fahrzeugquer- und Fahrzeuglängsrichtung in Abhängigkeit von Betriebssituationen des Kraftfahrzeuges zur Beeinflussung des Fahrverhaltens, insbesondere zur Verbesserung der Fahragilität und der Fahrstabilität. Dabei ist das hintere Differenzial (18) mit einem Überlagerungsgetriebe (22) kombiniert, mittels dem Antriebsmomente auf die Hinterräder (20) alternierend in Fahrzeugquerrichtung verschiebbar sind, wobei das Drehzahlverhältnis bzw. ein Drehzahlfehler mittels des Überlagerungsgetriebes (22) im Auslegungspunkt so vorgegeben ist, dass bei einem dem Auslegungspunkt zugeordneten, vorgegebenen Kurvenradius, der nicht der engsten Kurve entspricht, eine Umkehr der Differenzdrehzahlrichtung und keine Momentenverlagerung zum kurvenäußeren Rad erfolgt. Mittels der Vorrichtung zur Antriebsverteilung (24, 26; 44, 46; 52) sind ferner die Antriebsmomente alternierend zwischen dem vorderen Differential (14) und hinteren Differenzial (18) in Fahrzeuglängsrichtung verschiebbar.

## Beschreibung

Die Erfindung betrifft ein Antriebssystem für allradgetriebene Kraftfahrzeuge gemäß dem Oberbegriff des Patentanspruches 1.

Ein derartiges Antriebssystem beschreibt die DE 39 00 638 C2, bei dem über ein Zwischenachsdifferenzial ein vorderes und ein hinteres Differenzial angetrieben sind. Das hintere Differenzial weist ferner ein Überlagerungsgetriebe auf, mittels dem das Antriebsdrehmoment auf die hinteren Räder des Kraftfahrzeuges variierbar ist. So kann z. B. ein höheres Antriebsmoment auf das mit einer höheren Radlast beaufschlagte, kurvenäußere Hinterrad des Kraftfahrzeuges geleitet werden und somit den Vortrieb und die Kurvenstabilität erhöhen.

Aufgabe der Erfindung ist es, ein Antriebssystem der gattungsgemäßen Art vorzuschlagen, das durch entsprechende Auslegung weitere fahrdynamische Verbesserungen ermöglicht.

Diese Aufgabe wird erfindungsgemäß mit den Merkmalen des Patentanspruches 1 gelöst. Vorteilhafte Weiterbildungen der Erfindung sind Gegenstand der Unteransprüche.

Erfindungsgemäß wird eine Einrichtung zur gekoppelten variablen Verteilung der Antriebskräfte in Fahrzeugquerrichtung und Fahrzeuglängsrichtung in Abhängigkeit von Betriebssituationen des Kraftfahrzeugs vorgeschlagen, die zur Beeinflussung des Fahrverhaltens, insbesondere zur Verbesserung der Fahragilität und der Fahrstabilität eingesetzt wird. Dabei ist das hintere Differenzial mit einem Überlagerungsgetriebe kombiniert, wodurch die Antriebsmomente auf die Hinterräder alternierend in Fahrzeugquerrichtung verschiebbar sind, wobei das Drehzahlverhältnis bzw. der Drehzahlfehler mittels des Überlagerungsgetriebes, insbesondere über die dortigen Kupplungen, im Auslegungspunkt so vorgegeben ist, dass bei einem dem Auslegungspunkt zugeordneten, vorgegebenen Kurvenradius, der nicht der engsten Kurve entspricht, eine Umkehr der Differenzdrehzahlrichtung und damit keine Momentenverlagerung zum kuvenäußeren Rad erfolgt. Beim Befahren einer engeren Kurve ist somit mit anderen Worten keine Momentenverlagerung zum kurvenäußeren Rad mehr möglich, da sich die Richtung der Differenzdrehzahl umgekehrt hat. Zudem sind mittels der Vorrichtung zur Antriebsverteilung Antriebsmomente alternierend zwischen dem vorderen Differential und hinteren Differential in Fahrzeuglängsrichtung verschiebbar. Unter einer alternierenden Momentenverlagerung wird dabei die grundsätzliche Möglichkeit der Momentenverlagerung nach links und rechts bzw. nach vorne und hinten verstanden. Diese Begrifflichkeit umfasst neben dem Fall der abwechselnden Momentenverteilung, z. B. abwechselnd von links nach rechts, selbstverständlich auch diejenigen Fälle, in denen das Moment mehrmals nacheinander in dieselbe Richtung, z. B. mehrmals nacheinander nach links, verlagert wird.

Mit dem Hinterachsdifferenzial kann durch Verlagern von Moment nach außen die Fahragilität deutlich verbessert werden und damit Untersteuersituationen insgesamt besser beherrscht werden. Mit dem Hinterachsdifferenzial kann jedoch die Fahrstabilität bei Übersteuersituationen nur begrenzt verbessert werden. Hier kann durch den erfindungsgemäßen Einsatz des Mittendifferenzials, welches das Antriebsmoment nach vorne zur Vorderachse verlagert, abgeholfen werden, da durch dieses, die Übersteuersituationen wesentlich besser beherrscht werden können.

Insbesondere ist zusätzlich zu den Möglichkeiten eines Überlagerungsgetriebes an der Hinterachse des Kraftfahrzeuges und der damit verbundenen Momentenverteilung in Querrichtung eine Verlagerung des Gesamtantriebsmomentes vermehrt auf die Vorderräder dann vorteilhaft, wenn z. B. über den Gierratensensor eine Übersteuersituation erkannt wird bzw. an den Hinterrädern sowohl am kurveninneren und/oder am kurvenäußeren Hinterrad die maximal zulässigen Schlupfwerte erreicht sind und somit keine fahrdynamischen Vorteile mehr ausschöpfbar sind. In definierten Betriebssituationen des Kraftfahrzeuges ergibt dann eine Verlagerung des Antriebsmomentes auf die Vorderräder eine zusätzliche Stabilisierung und fahrdynamische Verbesserung des Fahrverhaltens des Kraftfahrzeuges.

Die Vorrichtung zur Antriebsverteilung kann vorteilhaft ein vorzugsweise über eine Kupplung sperrbares Zwischenachsdifferenzial sein, mit einer asymmetrischen, insbesondere heckbetonten Grundverteilung von z. B. 30% : 70%. Durch Schließen der Kupplung zumindest im Schlupfbereich kann somit in einfacher Weise neben einer herkömmlichen Differenzial-Längssperre das Antriebsmoment an der Vorderachse auf z. B. 50 : 50 erhöht werden.

Bevorzugt ist die Vorrichtung zur Antriebsverteilung ein vorzugsweise über eine Kupplung sperrbares Zwischenachsdifferenzial, wobei das vordere Differenzial und das hintere Differenzial ungleiche, insbesondere geringfügig ungleiche Übersetzungsverhältnisse aufweisen, z. B., von kleiner als 10%, so dass mit zunehmender Sperrung des Zwischenachsdifferenziales vermehrt Antriebsmoment auf das vordere Differenzial geleitet ist. Dies ermöglicht abhängig vom Schlupfzustand der Kupplung eine stufenlose Antriebsmomentenverteilung von der Grundverteilung von z. B. 50 : 50 bis zu 100% an der Vorderachse. Grundsätzlich kann auch eine Antriebsmomentenverteilung in umgekehrter Weise vorgesehen sein, indem z. B. durch entsprechend gestaltete Ausführungsformen vermehrt Antriebsmoment auf das hintere Differenzial geleitet wird. Die Kupplung kann dabei in an sich bekannter Weise eine geregelte, fluidbetätigte Lamellenkupplung sein.

Alternativ dazu kann, bei im wesentlichen gleichen Übersetzungsverhältnissen zwischen dem hinteren und dem vorderen Differenzial, zwischen dem Mittendifferenzial und der Kupplung auch ein Hilfsgetriebe zur Erzeugung einer definierten Differenzdrehzahl in der Kupplung vorgesehen sein, wobei die das Hilfsgetriebe bildende Vorgelegestufe als Hohlradstufe, als Planetengetriebe oder als Stirnradstufe ausgelegt sein kann.

Das eben zu den Sonderfahrsituationen insbesondere zu den Über- und Untersteuerungsfällen ausgeführte trifft im wesentlichen auch auf den fall einer weiteren alternativen Ausführungsform zu, bei dem die Vorrichtung zur Antriebsverteilung durch zwei Kupplungen als Mittendifferenzial gebildet ist, die im Antriebsstrang zu dem vorderen Differenzial und zu dem hinteren Differenzial angeordnet sind und mittels denen die jeweils zu übertragende Antriebsleistung einsteuerbar ist. Damit kann somit ein Zwischenachsdifferenzial entfallen und die Antriebsmomentenverteilung kann mit größten konstruktiven Freiheitsgraden zwischen 0 und 100% sowohl zur Vorderachse als auch zur Hinterachse gesteuert werden.

Die beiden Kupplungen können hydraulisch betätigte Lamellenkupplungen sein, die in einem dem Wechselgetriebe nachgeschaltetem Antriebsgehäuse angeordnet sind. Dabei kann baulich und fertigungstechnisch besonders vorteilhaft zumindest eine der Kupplungen zugleich als Anfahrkupplung des Kraftfahrzeuges ausgelegt sein, wodurch sich der Fertigungsaufwand des Antriebssystems vermindern lässt.

In fahrdynamisch besonders vorteilhafter Weise können mit den zuvor beschriebenen Ausführungsformen die Kupplungen bei einer festgestellten bzw. erfassten, definierten Übersteuerungstendenz des Kraftfahrzeuges beim Durchfahren von Kurven derart gesteuert werden, dass das Antriebsmoment des hinteren Differenziales vermindert bzw. das Antriebsmoment des vorderen Differenziales erhöht ist. Damit kann wirksam einer unzulässigen Übersteuerungstendenz entgegengewirkt werden, indem das Antriebsmoment an den Hinterrädern des Kraftfahrzeuges zumindest im Grenzfall zurückgenommen und vermehrt auf die Vorderräder verlagert wird. Damit kann somit in Situationen, in denen das hintere Differenzial wenig Potential zur Stabilisierung besitzt, also z. B. dem Übersteuern, durch Schließen der Kupplung im Mittendifferenzial Antriebsmoment nach vorne verlagert und dadurch das Fahrzeug stabilisiert werden.

Des weiteren können die Kupplungen bei einer oberhalb einer festgestellten bzw. erfassten, definierten Untersteuerungstendenz des Kraftfahrzeuges beim Durchfahren von Kurven derart gesteuert werden, dass das Antriebsmoment des vorderen Differenziales vermindert bzw. das Antriebsmoment des hinteren Differenziales erhöht ist. Das Kraftfahrzeug kann somit auf ein untersteuerndes, neutrales oder sofern gewünscht auf ein sportlich übersteuerndes Fahrverhalten eingestellt werden, wobei Parameter wie Geschwindigkeit, Lenkwinkel, Gierrate, Beschleunigung oder Verzögerung, etc. messtechnisch erfasst und in einem elektronischen Steuergerät entsprechend verarbeitet werden.

In vorteilhafter Weise kann dabei die Vorrichtung zur Antriebsverteilung steuerungstechnisch mit einem elektronischen Fahrstabilitäts-Programm (z. B. ESP) oder einer elektronischen Antischlupf-Regelung (z. B. ASR) des Kraftfahrzeuges verbunden sein, wobei dann die ohnehin vorhandenen Einrichtungen einschließlich des Steuergerätes auch die Antriebsmomentenverteilung wie vorbeschrieben durch Aktivierung der entsprechenden Kupplungen steuern.

In einer baulich und steuerungstechnisch besonders einfachen Ausgestaltung der Erfindung kann schließlich die Vorrichtung zur Antriebsverteilung ein momentenfühlendes Selbstsperrdifferenzial, z. B. ein selbstsperrendes Torsen-Differenzial sein. Eine derartige Antriebsstrang-Auslegung mit einem selbstregelnden, momentenfühlenden, passiven Mittendifferenzial und einem aktiven Achsdifferenzial, insbesondere Hinterachsdifferenzial, ist möglich, da das querübertragene Moment im Achsdifferenzial unabhängig vom Eingangsmoment ist. Das momentenfühlende passive Mittendifferenzial unterstützt dabei die Effektivität des Überlagerungsdifferenzials im Untersteuerfall durch das Verschieben von Antriebsmoment zur Hinterachse. Im Übersteuerfall dagegen stabilisiert das momentenfühlende Mittendifferenzial das Fahrzeug. Weiterhin bedingt die Kopplung des passiven Mittendifferenzials mit einem aktiven Achsdifferenzial, dass durch das Verlagern des Antriebsmomentes vom inneren zum äußeren Rad an der z. B. Hinterachse der mittlere Schlupf an der Hinterachse tendenziell kleiner als an der Vorderachse wird, wodurch das Mittendifferenzial mehr Moment zur Hinterachse verlagert. Beide Effekte erhöhen die Agilität und bewirken im Zusammenwirken einen erheblichen Funktionsvorteil. Eine derartige Kombination eines passiven, momentenfühlenden Mittendifferenzials mit einem aktiven Achsdifferenzial ist zudem baulich einfach und damit preiswert herstellbar, da im Gegensatz zu anderen Systemen keine zwei elektronischen, zusammenwirkenden Differenziale benötigt werden.

Mehrere Ausführungsbeispiele der Erfindung sind im Folgenden mit weiteren Einzelheiten näher erläutert. Die schematische Zeichnung zeigt in:
- Fig. 1: ein erstes Antriebssystem für ein allradgetriebenes Kraftfahrzeug, mit einer Antriebsmaschine, einem Geschwindigkeits-Wechselgetriebe, einem vorderen Differenzial, einem mit einem Überlagerungsgetriebe kombinierten, hinteren Differenzial und einer Vorrichtung zur Antriebsverteilung mit einem Zwischenachsdifferenzial und einer hydraulisch betätigten Lamellenkupplung,
- Fig. 2: ein zweites Antriebssystem gemäß Fig. 1, mit einer Vorrichtung zur Antriebsverteilung mit zwei hydraulisch betätigten Kupplungen,
- Fig. 3: ein drittes Antriebssystem gemäß Fig. 1, jedoch mit einem selbstsperrenden Torsen-Differenzial als Vorrichtung zur Antriebsverteilung, und
- Fig. 4: ein viertes Antriebssystem gemäß Fig. 1, mit einem Hilfsgetriebe zur Erzeugung einer definierten Differenzdrehzahl.

Das Antriebssystem für ein allradgetriebenes Kraftfahrzeug setzt sich im wesentlichen zusammen aus einer Antriebsmaschine bzw. Brennkraftmaschine 10, einem Geschwindigkeits-Wechselgetriebe 12, einem vorderen Differenzial 14 für den Antrieb der vorderen Räder 16 des Kraftfahrzeuges, einem hinteren Differenzial 18 für den Antrieb der hinteren Räder 20 des Kraftfahrzeuges, einem mit dem hinteren Differenzial 18 kombinierten Überlagerungsgetriebe 22 und einer Vorrichtung zur Antriebsverteilung zwischen dem vorderen Differenzial 14 und dem hinteren Differenzial 18 mit einem Zwischenachsdifferenzial 24 und einer hydraulisch betätigten Lamellenkupplung 26.

Die angeführten Bauteile des Antriebssystems sind soweit nicht beschrieben dem Fachmann geläufiger Konstruktion. Das Wechselgetriebe 12 kann ein Schaltgetriebe, ein automatisches Getriebe, etc. sein. Die Differenziale 14, 18 und 24 können Stirnraddifferenziale oder Kegelraddifferenziale sein. Auch die schlupfgesteuerte Lamellenkupplung 26 kann bekannter Bauart und trieblich so angeordnet sein, dass sie zwei Elemente des Zwischenachsdifferenziales 24 im geschlossenen Zustand verbindet bzw. als Differenzialsperre wirkt.

Auch das Überlagerungsgetriebe 22 kann bekannter Bauart sein, z. B. mit einer zu den Abtriebswellen 28, 30 des hinteren Differenziales 18 parallelen Vorgelegewelle 32, die in einem nicht dargestellten Gehäuse drehbar gelagert ist und die über einen Zahnradsatz mit Zahnrädern 34, 36 von einer mit dem Ausgleichsgehäuse (nicht dargestellt) des Differenziales 18 mit einer höheren Drehzahl als die Abtriebswellen 28, 30 angetrieben ist.

Die Vorgelegewelle 32 wiederum ist über Zahnradsätze 38, 40 mit den beiden Abtriebswellen 28, 30 trieblich verbunden, wobei die Zahnräder 40 Loszahnräder sind, die mit der Vorgelegewelle 32 über hydraulisch schlupfgesteuerte Lamellenkupplungen 42 alternierend kuppelbar sind. Die Übersetzungsverhältnisse der Zahnradsätze 38, 40 sind derart unterschiedlich zu dem die Vorgelegewelle 32 antreibenden Zahnradsatz 34, 36, dass bei einem alternierend schlupfgesteuerten Schließen der Lamellenkupplungen 42 zusätzliches Antriebsmoment auf die eine oder andere Abtriebswelle 28, 30 geleitet werden kann. Zur konkreten baulichen Ausführung eines solchen Überlagerungsgetriebes 22 wird nur beispielsweise auf die EP 0 844 416 B1 verwiesen.

Dadurch kann z. B. beim Durchfahren von Kurven auf das kurvenäußere Hinterrad 20 ein höheres Antriebsmoment als auf das kurveninnere Hinterrad 20 geleitet werden und umgekehrt. Drehzahldifferenzen zwischen dem vorderen Differenzial 14 und dem hinteren Differenzial 18 werden dabei über das Zwischenachsdifferenzial 24 ausgeglichen.

Zur weiteren fahrdynamischen Beeinflussung des Fahrverhaltens des Kraftfahrzeuges mit der Vorrichtung zur Antriebsverteilung ist das Zwischenachsdifferenzial 24 mit einer Grundverteilung von z. B. 30% auf das vordere Differenzial 14 und dann 70% auf das hintere Differenzial 18, also z. B. hecklastig ausgelegt. Durch mehr oder minder starkes Schließen der Lamellenkupplung 26 kann die Antriebsmomentenverteilung auf z. B. 50 : 50 geändert werden, also vermehrt Antriebsmoment auf das vordere Differenzial 14 geleitet werden.

Die Achsdifferenziale 14 und 18 können dabei grundsätzlich mit unterschiedlichen Übersetzungsverhältnissen von z. B. 35:9 vorne und 37 : 9 hinten ausgelegt sein. Die dadurch entstehende Drehzahldifferenz im Antriebsstrang wird über das Zwischenachsdifferenzial 24 ausgeglichen.

Wird die schlupfgesteuerte Lamellenkupplung 26 zunehmend geschlossen, so wird in dem Beispiel einer heckbetonten Grundverteilung aufgrund der direkteren Übersetzung des vorderen Differenziales 14 vermehrt, bevorzugt bis zu 100% des Antriebsmomentes auf das vordere Differenzial 14 umgeleitet und das hintere Differenzial 18 entsprechend entlastet. Mit einer heckbetonten Grundverteilung und einem unterschiedlichen Übersetzungsverhältnis kann ein großer Antriebsmomentenbereich mit technisch einfachen Mitteln elektronisch geregelt werden, von bevorzugt 100 : 0 bis zur Grundauslegung. Dies gilt analog auch für eine frontbetonte Grundverteilung und unterschiedlichen Übersetzungsverhältnissen.

Die Ansteuerung der hydraulisch betätigten Kupplungen 26, 42 kann über ein einheitliches, elektronisches Steuergerät (nicht dargestellt) erfolgen, in dem über entsprechende Sensoren z. B. die Geschwindigkeit des Kraftfahrzeuges, der Lenkwinkel der vorderen, lenkbaren Räder 16, Radbeschleunigungen bzw. Verzögerungen, Gierrate, etc. in bekannter Weise erfasst und logisch verknüpft werden und über Endverstärker hydraulische Steuerventile zur Aktivierung der Kupplungen 26, 42 betätigt werden. Das elektronische Steuergerät kann in bekannter Weise das Steuergerät eines elektronischen Fahrstabilitäts-Programmes (z. B. ESP) oder einer Anti-Schlupf-Regelung (ASR) des Kraftfahrzeuges sein, so dass der steuerungstechnische Mehraufwand deutlich vermindert ist.

Die Programmierung des elektronischen Steuergerätes bewirkt z. B., dass bei einer oberhalb einer definierten Schwelle liegenden Übersteuerungstendenz des Kraftfahrzeuges beim Durchfahren von Kurven (erfassbar durch den Lenkwinkel der Lenkung des Kraftfahrzeuges, die Gierrate, Beschleunigungswerte der Hinterräder 20, etc.) die Lamellenkupplung 26 derart gesteuert wird, z. B. durch Schließen der Kupplung 26 im Schlupfbereich, dass das Antriebsmoment des hinteren Differenziales 18 vermindert bzw. das Antriebsmoment des vorderen Differenziales 14 erhöht ist. Dies vermindert die Übersteuerungstendenz und verbessert bei Erreichen bestimmter Grenzwerte die Kurvenstabilität des Kraftfahrzeuges.

Des weiteren wird bei einer oberhalb einer definierten Schwelle liegenden Untersteuerungstendenz des Kraftfahrzeuges beim Durchfahren von Kurven die Lamellenkupplung 26 z. B. voll geöffnet, so dass das Antriebsmoment des vorderen Differenziales 14 im Rahmen der Grundauslegung vermindert bzw. das Antriebsmoment des hinteren Differenziales 18 erhöht wird.

Neben diesen beschriebenen Eingriffsmöglichkeiten sind weitere Eingriffe zur Erhöhung des Antriebsmomentes des vorderen Differenziales 14 steuerbar, z. B. bei unterschiedlichen Geschwindigkeiten (z. B. höheres Antriebsmoment an der Vorderachse bei hohen Fahrzeuggeschwindigkeiten) oder bei ungünstigen Fahrbahnverhältnissen (Aqua planing, Glatteis, etc.).

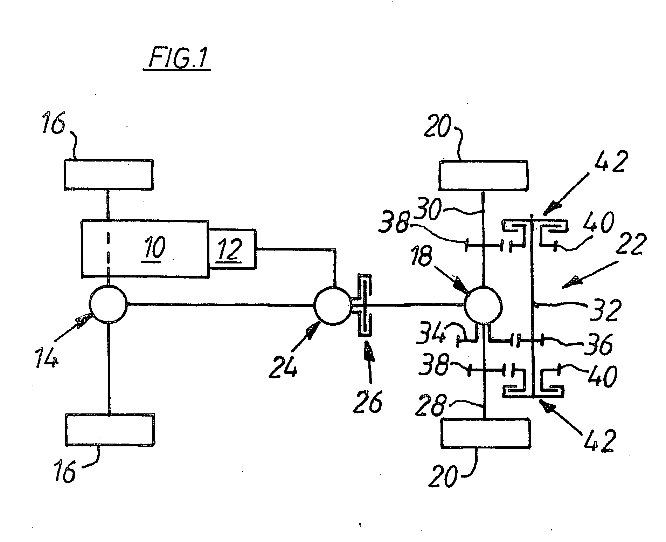

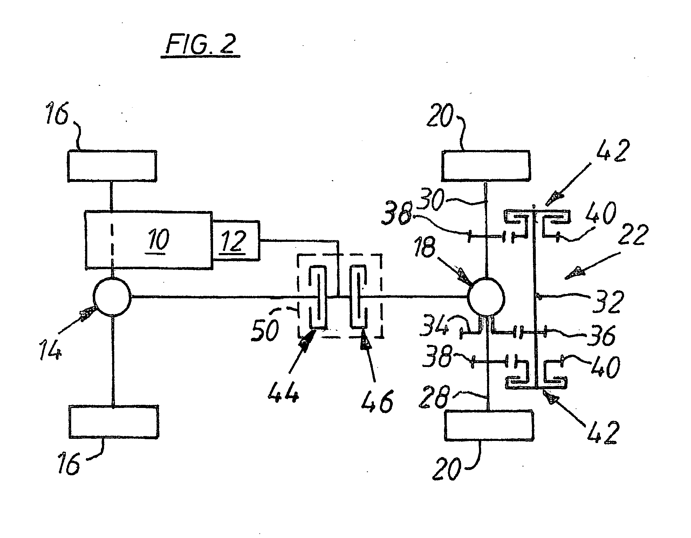

Die Fig. 2 zeigt ein weiteres Ausführungsbeispiel der Erfindung, das nur insoweit beschrieben ist, als es wesentlich von der Fig. 1 abweicht. Gleiche Teile sind mit gleichen Bezugszeichen versehen.

In dem Antriebsstrang nach dem Wechselgetriebe 12 sind anstelle des Zwischenachsdifferenziales 24 mit der Lamellenkupplung 26 zwei hydraulisch betätigte Lamellenkupplungen 44, 46 angeordnet, über die das vordere Differenzial 14 und das hintere Differenzial 18 antreibbar sind. Die Lamellenkupplungen 44, 46 sind in einem einheitlichen Antriebsgehäuse 50 positioniert und können in nicht dargestellter Weise gleichzeitig oder alternierend in den Schlupfbereich gebracht oder vollständig geschlossen werden. Zumindest eine der Lamellenkupplungen 44, 46, bevorzugt jedoch beide, sind so ausgelegt, dass sie zugleich als Anfahrkupplungen für das Kraftfahrzeug dienen können.

Beim Anfahren des Kraftfahrzeuges sind somit beide Lamellenkupplungen 44, 46 geschlossen, so dass bei Bedarf das volle Antriebsmoment zur Verfügung steht.

Im Fahrbetrieb sind die Lamellenkupplungen 44, 46 im Schlupfbereich so gesteuert, dass ein definiertes Antriebsmoment auf das vordere Differenzial 14 und das hintere Differenzial 18 mit dem Überlagerungsgetriebe 22 ausgeübt wird. Dies kann je nach konstruktiven Vorgaben und/oder nach Fahrerwunsch manuell einstellbar sportlich (heckbetont, übersteuernd) oder komfortabel (neutral oder frontbetont, untersteuernd) sein.

Die Vorrichtung zur Antriebsverteilung gemäß Fig. 2 mit den beiden schlupfgesteuerten Lamellenkupplungen 44, 46 kann zudem wie vorbeschrieben zur Fig. 1 in definierten Fahrsituationen bis zu 100% Antriebsmoment auf das vordere Differenzial 14 leiten. Diese Lösung mit zwei Lamellenkupplungen 44, 46 kann bis zu 100% Antriebsmoment auf das hintere Differenzial 18 leiten. Sind beide Lamellenkupplungen 44, 46 geschlossen, so wirken diese als Differenzialsperre in Längsrichtung.

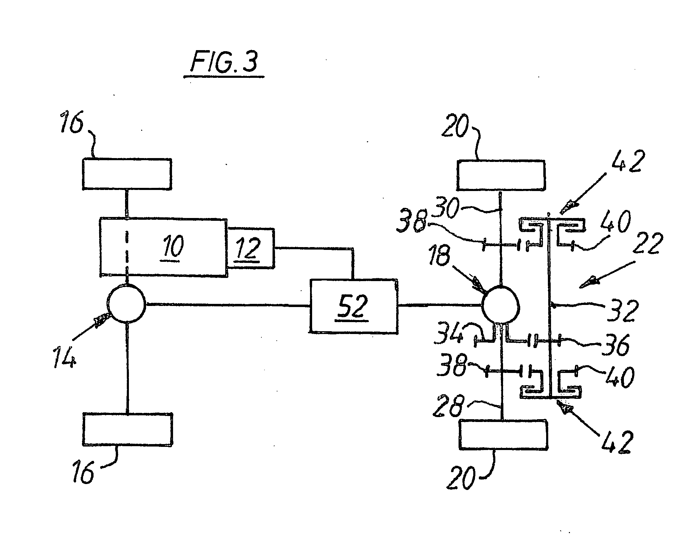

Ein weiteres, alternatives Ausführungsbeispiel der Erfindung mit steuerungstechnisch vereinfachtem Aufwand zeigt die Fig. 3, die wiederum nur soweit beschrieben ist, als sie wesentlich von der Fig. 1 abweicht. Gleiche Teile weisen die gleichen Bezugszeichen auf.

Gemäß der Fig. 3 ist in den Antriebsstrang des Kraftfahrzeuges nach dem Wechselgetriebe 12 als Zwischenachsdifferenzial ein selbstsperrendes Torsen-Differenzial 52 als Vorrichtung zur Antriebsverteilung eingesetzt.

Das nur angedeutete Torsen-Differenzial 52 ist bekannter Bauart und hat aufgrund seiner Konstruktion die Eigenschaft, ein "momentenfühlendes" Sperrdifferenzial zu sein.

Die Sperrfunktion des Torsen-Differenziales 52 erfolgt aufgrund der Verzahnungsverhältnisse im Differenzial. Das Torsen-Differenzial 52 kann bevorzugt ebenfalls in der Grundauslegung heckbetont ausgeführt sein und somit bei einer definierten Übersteuerungstendenz des Kraftfahrzeuges das Antriebsmoment vermehrt auf das vordere Differenzial 14 umleiten, wobei der zu den Fig. 1 und 2 beschriebene Steuerungsaufwand entfallen kann.

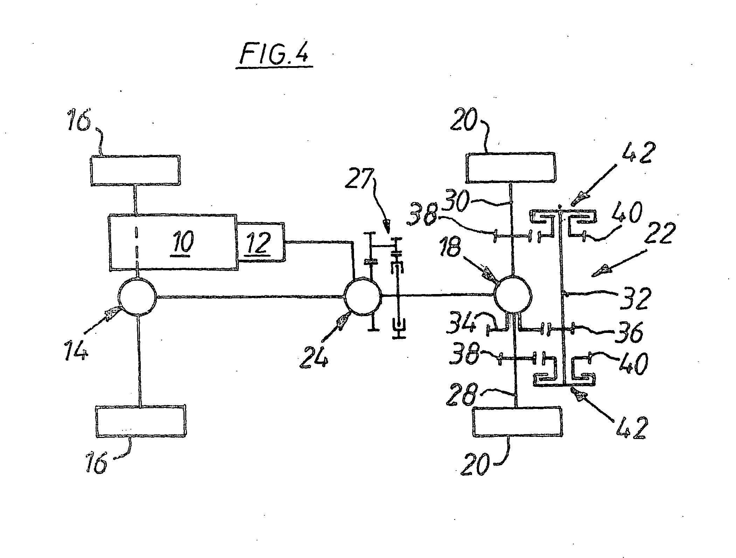

Gemäß der in der Fig. 4 dargestellten Ausführungsform eines alternativen Antriebsstranges eines Kraftfahrzeuges ist bei im wesentlichen gleichen Übersetzungsverhältnissen zwischen dem hinteren Differenzial 18 und dem vorderen Differenzial 14 vorgesehen, zwischen dem Mittendifferenzial 24 und einer Kupplung 26 ein Hilfsgetriebe 27 zu schalten, mittels dem eine definierte Differenzdrehzahl in der Kupplung 26 erzeugt werden kann. Das als Vorgelegestufe ausgebildete Hilfsgetriebe 27 ist hier lediglich beispielhaft als Stirnradstufe ausgelegt und kann alternativ auch als Hohlradstufe oder als Planetengetriebe ausgebildet sein. Mit einem derartigen Aufbau ergeben sich die zuvor in Verbindung mit der Ausführungsform der Fig. 1 geschilderten Möglichkeiten.

## Patentansprüche

1. Antriebssystem für allradgetriebene Kraftfahrzeuge, mit einer Vorrichtung zur Antriebsverteilung auf ein vorderes und ein hinteres Differenzial, welche die Antriebsleistung auf die jeweils zugeordneten Räder übertragen,
mit einer Vorrichtung zur gekoppelten variablen Verteilung der Antriebskräfte in Fahrzeugquer- und Fahrzeuglängsrichtung in Abhängigkeit von Betriebssituationen des Kraftfahrzeuges zur Beeinflussung des Fahrverhaltens, insbesondere zur Verbesserung der Fahragilität und der Fahrstabilität, dergestalt
dass das hintere Differenzial (18) mit einem Überlagerungsgetriebe (22) kombiniert ist, mittels dem Antriebsmomente auf die Hinterräder (20) alternierend in Fahrzeugquerrichtung verschiebbar sind, wobei das Drehzahlverhältnis bzw. ein Drehzahlfehler mittels des Überlagerungsgetriebes (22) im Auslegungspunkt so vorgegeben ist, dass bei einem dem Auslegungspunkt zugeordneten, vorgegebenen Kurvenradius, der nicht der engsten Kurve entspricht, eine Umkehr der Differenzdrehzahlrichtung und keine Momentenverlagerung zum kurvenäußeren Rad erfolgt, und
dass mittels der Vorrichtung zur Antriebsverteilung (24, 26; 44, 46; 52) Antriebsmomente alternierend zwischen dem vorderen Differential (14) und hinteren Differenzial (18) in Fahrzeuglängsrichtung verschiebbar sind.

2. Antriebssystem nach Anspruch 1, **dadurch gekennzeichnet, dass** der Kurvenradius im Auslegungspunkt einen Wert zwischen 10 bis 25 m, bevorzugt einen Wert zwischen 15 bis 20 m aufweist, dem ein Drehzahlfehler im Bereich von 15 bis 28%, bevorzugt zwischen 18 bis 25% zugeordnet ist.

3. Antriebssystem nach Anspruch 1 oder 2, **dadurch gekennzeichnet, dass** die Vorrichtung zur Antriebsverteilung ein vorzugsweise über eine Kupplung (26) sperrbares Zwischenachsdifferenzial (24) mit einer asymmetrischen Grundverteilung ist.

4. Antriebssystem nach Anspruch 3, **dadurch gekennzeichnet, dass** die Vorrichtung zur Antriebsverteilung ein sperrbares Zwischenachsdifferenzial (24) ist, das bei einer heckbetonten Grundverteilung mit zunehmender Sperrung Antriebsmoment auf das vordere Differenzial (14) oder bei einer frontbetonten Grundverteilung mit zunehmender Sperrung Antriebsmoment auf das hintere Differenzial (18) leitet.

5. Antriebssystem nach Anspruch 4, **dadurch gekennzeichnet, dass** die Vorrichtung zur Antriebsverteilung ein vorzugsweise über eine Kupplung (26) sperrbares Zwischenachsdifferenzial (24) ist und dass das vordere Differenzial (14) und das hintere Differenzial (18) geringfügig ungleiche Übersetzungsverhältnisse derart aufweisen, dass mit zunehmender Sperrung des Zwischenachsdifferenziales (24) vermehrt Antriebsmoment auf das vordere Differenzial (14) geleitet ist für eine heckbetonte Grundverteilung des Zwischenachsdiffernziales.

6. Antriebssystem nach Anspruch 4, **dadurch gekennzeichnet, dass** die Vorrichtung zur Antriebsverteilung ein über eine Kupplung sperrbares Zwischenachsdifferenzial ist und dass das vordere Differenzial und das hintere Differenzial geringfügig ungleiche Übersetzungsverhältnisse derart aufweisen, dass mit zunehmender Sperrung des Zwischenachsdifferenziales vermehrt Antriebsmoment auf das hintere Differenzial geleitet ist für eine frontbetonte Grundverteilung des Zwischenachsdifferenziales.

7. Antriebssystem nach Anspruch 3, **dadurch gekennzeichnet, dass** bei im wesentlichen gleichen Übersetzungsverhältnissen zwischen dem hinteren und vorderen Differenzial, zwischen einem Mittendifferenzial (24) einer Kupplung (26) noch ein Hilfsgetriebe (27) zur Erzeugung einer definierten Differenzdrehzahl in der Kupplung (26) vorgesehen ist.

8. Antriebssystem nach Anspruch 7, **dadurch gekennzeichnet, dass** die Vorgelegestufe als Hohlradstufe oder Planetengetriebe oder als Stirnradstufe ausgelegt ist.

9. Antriebssystem nach einem der Ansprüche 3 bis 8, **dadurch gekennzeichnet,**
**dass** die Kupplung eine schlupfgeregelte Lamellenkupplung (26) ist, und
**dass** das sperrbare Zwischenachsdifferenzial ein offenes Differenzial ist.

10. Antriebssystem nach Anspruch 1, **dadurch gekennzeichnet, dass** die Vorrichtung zur Antriebsverteilung durch zwei Kupplungen (44, 46) gebildet ist, die im Antriebsstrang zu dem vorderen Differenzial (14) und dem hinteren Differenzial (18) angeordnet sind und mittels denen die jeweils zu übertragende Antriebsleistung einsteuerbar ist.

11. Antriebssystem nach Anspruch 10, **dadurch gekennzeichnet, dass** die beiden Kupplungen hydraulisch betätigte Lamellenkupplungen (44, 46) sind, die in einem dem Wechselgetriebe (12) nachgeschaltetem Antriebsgehäuse (50) angeordnet sind.

12. Antriebssystem nach Anspruch 10 oder Anspruch 11, **dadurch gekennzeichnet, dass** zumindest eine der Kupplungen (44, 46) zugleich als Anfahrkupplung des Kraftfahrzeuges ausgelegt ist.

13. Antriebssystem nach einem der Ansprüche 1 bis 12, **dadurch gekennzeichnet, dass** die Kupplungen (26; 44, 46) beim Durchfahren von Kurven bei Erfassung einer oberhalb einer definierten Übersteuerungstendenz des Kraftfahrzeuges derart steuerbar sind, dass das Antriebsmoment des hinteren Differenziales (18) vermindert bzw. das Antriebsmoment des vorderen Differenziales (14) erhöht ist.

14. Antriebssystem nach einem der Ansprüche 1 bis 13, **dadurch gekennzeichnet, dass** die Kupplungen (26; 44, 46) beim Durchfahren von Kurven bei Erfassung einer oberhalb einer definierten Untersteuerungstendenz des Kraftfahrzeuges derart steuerbar sind, dass das Antriebsmoment des vorderen Differenziales (14) vermindert bzw. das Antriebsmoment des hinteren Differenziales (18) erhöht ist.

15. Antriebssystem nach einem der vorhergehenden Ansprüche, **dadurch gekennzeichnet, dass** die Vorrichtung zur Antriebsverteilung steuerungstechnisch mit einem elektronischen Fahrstabilitäts-Programm (z. B. ESP) oder einer elektronischen Antischlupf-Regelung (z. B. ASR) des Kraftfahrzeuges verbunden ist.

16. Antriebssystem nach Anspruch 1, **dadurch gekennzeichnet, dass** die Vorrichtung zur Antriebsverteilung ein momentenfühlendes Selbstsperredifferenzial, insbesondere ein selbstsperrendes Torsen-Differenzial (52) ist.

17. Antriebssystem nach einem der Ansprüche 1 bis 16, **dadurch gekennzeichnet, dass** das Antriebssystem in Verbindung mit einer Längsmotorisierung eingesetzt ist.
